# EUROPÄISCHE PATENTSCHRIFT

(11) **EP 2 745 080 B1**
(45) Veröffentlichungstag und Bekanntmachung des Hinweises auf die Patenterteilung: **25.09.2019**
(21) Anmeldenummer: 12730450.9
(22) Anmeldetag: 19.06.2012
(51) Int. Cl.: G01D 3/036, G01P 1/00, G01P 3/14, G01P 15/08

(54) **SENSOR, SENSOREINHEIT UND VERFAHREN ZUR HERSTELLUNG EINER SENSOREINHEIT**
SENSOR, SENSOR UNIT, AND METHOD FOR PRODUCING A SENSOR UNIT
CAPTEUR, UNITÉ DE DÉTECTION ET PROCÉDÉ DE FABRICATION D'UNE UNITÉ DE DÉTECTION

(30) Priorität: 16.08.2011 DE 102011080971
(43) Veröffentlichungstag der Anmeldung: 25.06.2014
(73) Patentinhaber: Robert Bosch GmbH, 70442 Stuttgart (DE)
(72) Erfinder: HOFSAESS, Michael, 71665 Vaihingen/Enz (DE)
(86) Internationale Anmeldenummer: PCT/EP2012/061638
(87) Internationale Veröffentlichungsnummer: WO 2013/023813

(56) Entgegenhaltungen:
- EP-A2- 1 443 331
- WO-A2-99/54683
- DE-A1-102005 028 906
- DE-A1-102006 026 878
- DE-A1-102009 000 574
- DE-A1-102009 020 838
- DE-A1-102009 045 911

## Beschreibung

### Stand der Technik

Die Erfindung geht aus von einer Sensoreinheit mit einem Sensor insbesondere zur Beschleunigungs- oder Drehratenmessung und einer Leiterplatte, auf welcher der Sensor angeordnet ist, nach der Gattung des unabhängigen Patentanspruchs 1 und von einem korrespondierenden Verfahren zur Herstellung einer Sensoreinheit nach der Gattung des unabhängigen Patentanspruchs 3.

Üblicherweise werden in modernen Sicherheitssystemen Sensoren mit mindestens einem Sensorelement zur Messung inertialer Größen, wie beispielsweise der Beschleunigung und/oder der Drehrate eingebaut. Die Beschleunigungs- und/oder Drehratensensoren weisen schwingende Massen auf, welche in einem vorgegebenen Frequenzbereich betrieben werden. Treten Störgrößen bzw. Störfrequenzen auf, welche in dem vorgegebenen Frequenzbereich liegen und nicht von der zu messenden Größe stammen, wie beispielsweise Schwingungen des Antriebs, dann kann die Messfunktion des Sensors beeinträchtigt oder komplett gestört werden. In vielen Anwendungsfällen, bei welchen eine hohe Signalgüte erforderlich ist und/oder bei welchen am Einbauort mindestens eine Störquelle bzw. Störfrequenz vorliegt, ist eine Unterbrechung der Störwirkkette erforderlich. Die Störwirkkette kann insbesondere an der Leiterplatte unterbrochen werden, auf welcher der Sensor mit dem Sensorelement angeordnet ist.

In der Offenlegungsschrift DE 10 2009 001 930 A1 wird beispielsweise eine Sensoreinheit mit einem Gehäuse und einer innerhalb des Gehäuses angeordneten Leiterplatte beschrieben, auf welcher ein Sensor mit einem Sensorelement angeordnet ist. Zwischen der Leiterplatte und dem Gehäuse ist ein Elastomerelement angebracht, welches die Leiterplatte elektrisch und mechanisch mit dem Gehäuse verbindet. Durch das Elastomerelement wird eine mechanische Entkopplung des Sensorelements von dem Gehäuse erzielt. Störungen in Form von Störschwingungen bzw. Störfrequenzen, welche auf das Gehäuse einwirken können, werden durch das Elastomerelement gedämpft. Des Weiteren können durch das leitende Elastomerelement zusätzliche Mittel zur elektrischen Kontaktierung der Leiterplatte eingespart werden.

In der Offenlegungsschrift DE 10 2009 000 571 A1 wird beispielsweise eine Sensoreinheit mit einem Gehäuse sowie einer im Gehäuse angeordneten Leiterpleite beschrieben, auf welcher ein Sensor mit einem Sensorelement angeordnet ist. Die Leiterplatte ist flexibel ausgeführt. Durch die flexibel ausgeführte Leiterplatte wird eine mechanische Entkopplung des Sensorelements von dem Gehäuse erzielt. Störfrequenzen, welche auf das Gehäuse einwirken, werden durch die flexible Leiterplatte gedämpft.

Aus der DE 10 2005 028 906 A1 ist eine Vorrichtung für die Prüfung von Banknoten in einer Banknotenbearbeitungsmaschine bekannt, bei der für die Prüfung von Banknoten in einer Banknotenbearbeitungsmaschine, mit mindestens einem Sensor für die Erfassung von die zu prüfenden Banknoten kennzeichnenden Informationen, ist der Sensor über eine erste Kleberschicht mit einem biegesteifen Träger verbunden, der biegesteife Träger ist über eine zweite, dauerelastische Kleberschicht mit einem Bestandteil der Vorrichtung für die Prüfung von Banknoten und/oder direkt mit der Banknotenbearbeitungsmaschine verbunden.

### Offenbarung der Erfindung

Der erfindungsgemäße Sensoreinheit mit einem Sensor und mit einer Leiterplatte, auf welcher der Sensor angeordnet ist mit den Merkmalen des unabhängigen Patentanspruchs 1 hat demgegenüber den Vorteil, dass der Sensor mindestens ein elastisches Dämpfungselement umfasst, welches in vorteilhafter Weise von außen einwirkende Störschwingungen bzw. Störfrequenzen dämpft und Mittel zur elektrischen und/oder mechanischen Kontaktierung des Sensorelements aufweist. Auf diese Weise kann ein Sensor umgesetzt werden, welcher als gedämpftes Feder-Masse-System ausgeführt ist, welches mindestens ein elastisches Dämpfungselement und das Sensorelement umfasst. Hierbei ist das Dämpfungselement am Sensorelement angebracht und bildet mit dem Sensorelement den Sensor. Auf diese Weise kann das messende Sensorelement wirkungsvoll über das Dämpfungselement von anderen vorhandenen Baugruppen, wie beispielsweise einer Leiterplatte und/oder einem Gehäuse und/oder einer Auswerte- und Steuereinheit entkoppelt werden. Der erfindungsgemäße Sensor kann bei der Weiterverarbeitung in vorteilhafter Weise wie ein Standardbauelement einfach aus einem Gurt bestückt werden. Da das Sensorelement schon im Sensor gedämpft wird, kann es in vorteilhafter Weise möglich sein, dass die Leiterplatte und/oder das Gehäuse einer Sensoreinheit nicht separat gegen unerwünschte äußere Einflüsse entkoppelt und/oder gedämpft werden müssen. Dadurch kann auch bei beschränktem Einbauraum bzw. bei fehlenden Möglichkeiten zur Umsetzung einer Dämpfung des Gehäuses und/oder der Leiterplatte eine hohe Signalgüte erzielt werden. Des Weiteren können Kosten gespart werden, da der Sensor in beliebige Sensoreinheiten eingebaut werden kann, ohne dass zusätzliche Abschirmungs- und/oder Dämpfungsmaßnahmen ergriffen werden müssen.

Die erfindungsgemäße Sensoreinheit, insbesondere zur Beschleunigungs- und/oder Drehratenerfassung in einem sicherheitsrelevanten Fahrzeugsystem, umfasst mindestens eine Leiterplatte, auf welcher ein Sensor über ein geeignetes Verfahren wie beispielsweise Schweißen, Löten, Kleben und/oder Schrauben befestigt ist. Störschwingungen bzw. Störfrequenzen, welche die Messergebisse des im Sensor enthaltenden Sensorelements verfälschen, können durch das mindestens eine elastisches Dämpfungselement gedämpft werden, welches zwischen dem Sensorelement und der Leiterplatte angeordnet ist. Das Dämpfungselement ist am Sensorelement angebracht und weist Mittel zur elektrischen und/oder mechanischen Kontaktierung des Sensorelements auf. Auf diese Weise kann das messende Sensorelement wirkungsvoll über das Dämpfungselement von anderen in einer Sensoreinheit vorhandenen Baugruppen, wie beispielsweise einer Leiterplatte bzw. einem Gehäuse bzw. einer Auswerte- und Steuereinheit entkoppelt werden.

Der erfindungsgemäße ist das mindestens eine elastische Dämpfungselement als Leitkleberverbindung ausgeführt, welche eine vorgegebene Viskosität und/oder Duktilität aufweist. In vorteilhafter Weise entfällt bei dieser Ausführungsform mindestens ein Produktionsschritt, da das elektrische bzw. mechanische Kontaktieren des Sensors, beispielsweise mit einer Leiterplatte einer Sensoreinheit, und das Einbringen des elastischen Dämpfungsmaterials in einem Produktionsschritt erfolgt können.

Ausführungsformen der vorliegenden Erfindung stellen einen Sensor, vorzugsweise einen Beschleunigungs- und/oder Drehratensensor zur Verfügung. Der Sensor weist ein messendes Sensorelement auf, welches vorzugweise eine schwingende Masse umfasst und in einem vorgegebenen Frequenzbereich betrieben wird. Erfindungsgemäß umfasst der Sensor mindestens ein elastisches Dämpfungselement, welches äußere Störschwingungen bzw. Störfrequenzen dämpft. Das Dämpfungselement ist am Sensorelement angebracht und weist Mittel zur elektrischen und/oder mechanischen Kontaktierung des Sensorelements auf.

Bei dem erfindungsgemäßen Verfahren zur Herstellung einer Sensoreinheit, welche eine Leiterplatte und einen Sensor mit einem Sensorelement aufweist, wird das Sensorelement des Sensors mit mindestens einem elastischen Dämpfungselement verbunden, wobei das Sensorelement über Mittel zur elektrischen und/oder mechanischen Kontaktierung des mindestens einen Dämpfungselement elektrisch und/oder mechanisch mit der Leiterplatte verbunden wird. Ausführungsformen des erfindungsgemäßen Verfahrens sind flexibel, da eine Vielzahl an Befestigungsmöglichkeiten zwischen dem Dämpfungselement und der Leiterplatte eingesetzt werden können. So kann das elastische Dämpfungselement beispielsweise auf die Leiterplatte gelötet, geschweißt, geklebt oder gecrimpt werden, ohne dass das Sensorelement beschädigt wird, welches mit dem Dämpfungselement verbunden ist.

Gemäß dem erfindungsgemäßen Verfahrens zur Herstellung einer Sensoreinheit wird das mindestens eine elastische Dämpfungselement als Leitkleberverbindung mit einer vorgegeben Viskosität und/oder Duktilität ausgeführt. Der Leikleber kann zwischen der Leitplatte und dem Sensorelement eingebracht werden, um das Sensorelement elektrisch und mechanisch mit der Leitplatte zu verbinden. In vorteilhafter Weise kann auf diese Weise ein kostengünstiges Dämpfungselement und eine einfache elektrische und/oder mechanische Kontaktierung realisiert werden. Des Weiteren können die Herstellungskosten durch das Einsparen von mindestens einem Fertigungsschritt reduziert werden. Bei dieser Ausführungsform ist zudem weniger Einbauraum erforderlich.

Durch die in den abhängigen Ansprüchen aufgeführten Maßnahmen und Weiterbildungen sind vorteilhafte Verbesserungen des im unabhängigen Patentanspruch 1 angegebenen Sensoreinheit und des im unabhängigen Patentanspruch 3 angegebenen Verfahrens möglich.

Alternativ kann das mindestens eine elastische Dämpfungselement zur elektrischen und/oder mechanischen Kontaktierung des Sensorelements mindestens ein Federelement mit mindestens einem Kontaktelement aufweisen kann. Das Federelement kann beispielsweise mit zwei Kontaktflächen ausgeführt werden. Hierbei kann das Sensorelement an einer ersten Kontaktfläche befestigt werden. Über eine zweite Kontaktfläche kann der Sensor in einer Sensoreinheit auf einer Leiterplatte befestigt werden. In vorteilhafter Weise kann das Federelement aus einem elektrisch leitfähigen, gut lötbaren und nicht korrosiven Material gefertigt werden und das Sensorelement elektrisch mit der Leiterplatte verbinden, so dass in vorteilhafter Weise ein elektrischer Datenaustausch zwischen dem Sensor und einer auf der Leiterplatte angeordneten Auswerte- und Steuereinheit ermöglicht wird. Des Weiteren ist die Dämpfung der unerwünschten Schwingungen bzw. Frequenzen in vorteilhafter Weise durch die Auswahl des Materials des Federelements in weiten Grenzen einstellbar. Zudem ergeben sich durch das Federelement in vorteilhafter Weise geringe Materialkosten.

In einer alternativen Ausgestaltung des erfindungsgemäßen Sensors kann das mindestens eine Federelement als Stanz-Biegeteil ausgeführt werden. Dies ermöglicht eine kostengünstige Massenherstellung des Federelements.

In einer weiteren alternativen Ausgestaltung des erfindungsgemäßen Sensors kann das Federelement von einem elastischen Dämpfungsmaterial umhüllt werden, welches vorzugsweise als Liquid Silicon Rubber (LSR) ausgeführt ist. Das LSR-Material kann in vorteilhafter Weise Zwischenräume in einer vorgegebenen Form vollständig ausfüllen, in welche das mindestens eine Federelement eingebracht wird. Dadurch, kann der Sensor in nahezu jede beliebige äußere Form gebracht werden. Des Weiteren weist das LSR-Material dämpfende und isolierende Eigenschaften auf, welche das leitende Federelement schützen und/oder elektrische Kurzschlüsse vermeiden und/oder das Dämpfungsverhalten des Federelements unterstützen.

In weiterer vorteilhafter Ausgestaltung des erfindungsgemäßen Sensors misst das Sensorelement eine Beschleunigung und/oder eine Drehrate. In vorteilhafter Weise können diese störanfälligen Sensorelemente durch das elastische Dämpfungselement sicher vor Störschwingungen bzw. Störfrequenzen geschützt werden. Zudem können kleine, einfach einbaubare Sensoren für sicherheitsrelevante Fahrzeugsysteme zur Verfügung gestellt werden.

In einer alternativen Ausgestaltung des erfindungsgemäßen Verfahrens zur Herstellung einer Sensoreinheit kann das elastische Dämpfungselement aus mindestens einem Federelement mit mindestens einem Kontaktelement hergestellt werden, wobei das mindestens eine Federelement in einem Stanzbiegeverfahren hergestellt und nach dem Verbinden mit dem Sensorelement mit einem elastischen Dämpfungsmaterial vergossen werden kann. Hierbei wird beim Vergießen das Kontaktelement des mindestens einen Federelements ausgespart, welches mit der Leiterplatte verbunden wird. Ein weiteres Kontaktelement des Federelements kann mit dem Sensorelement verbunden werden. In vorteilhafter Weise kann der Sensor, welcher das Sensorelement und das Dämpfungselement umfasst, auf nahezu jeder Oberfläche befestigt werden, wodurch die Sensoreinheit individuell an die Einbauumgebung angepasst werden kann.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Ausführungsbeispiels einer erfindungsgemäßen Sensoreinheit.
Fig. 2 zeigt eine schematische Darstellung eines Federelements für die erfindungsgemäße Sensoreinheit aus Fig. 1 in einem ersten Fertigungszustand.
Fig. 3 zeigt eine schematische Darstellung des Federelements aus Fig. 2 in einem zweiten Fertigungszustand.
Fig. 4 und 5 zeigen jeweils eine schematische Darstellung des Federelements aus Fig. 2 oder 3 nach dem Einlegen in eine Werkzeugform zu Herstellung eines Sensors für die erfindungsgemäße Sensoreinheit aus Fig. 1.
Fig. 6 zeigt eine schematische Darstellung des Sensors für die erfindungsgemäße Sensoreinheit aus Fig. 1 in einem ersten Fertigungszustand.
Fig. 7 zeigt eine schematische Darstellung des Sensors aus Fig. 6 in einem zweiten Fertigungszustand.
Fig. 8 zeigt eine schematische Darstellung des Sensors für die erfindungsgemäße Sensoreinheit aus Fig. 1 in einem dritten Fertigungszustand.
Fig. 9 zeigt eine schematische Darstellung der erfindungsgemäßen Sensoreinheit aus Fig. 1 in einem ersten Fertigungszustand.
Fig. 10 zeigt eine schematische Schnittdarstellung eines weiteren Ausführungsbeispiels einer erfindungsgemäßen Sensoreinheit.

### Ausführungsformen der Erfindung

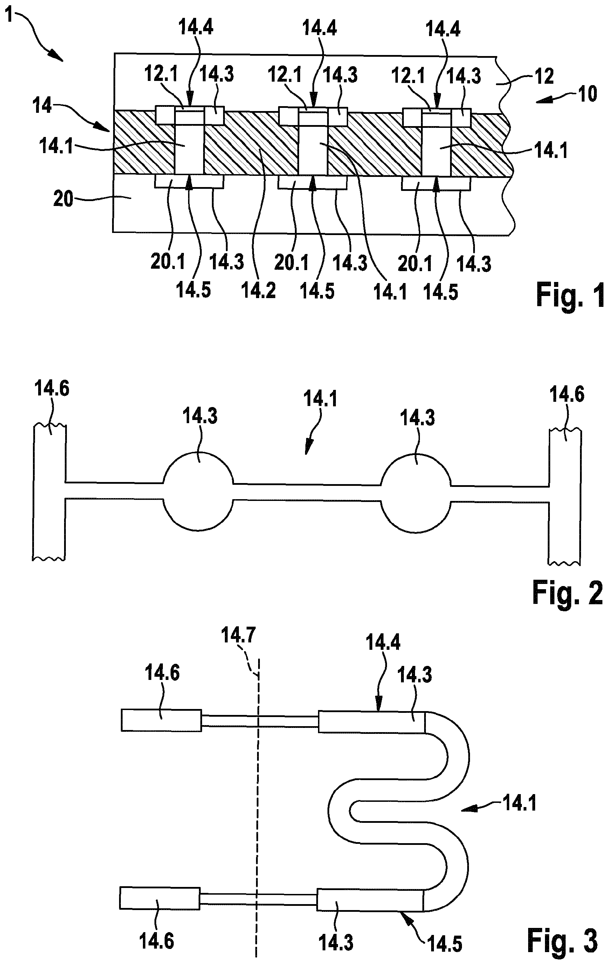

Wie aus Fig. 1 bis 10 ersichtlich ist, umfassen die dargestellten Ausführungsbeispiele einer Sensoreinheit 1, 1' jeweils eine Leiterplatte 20, 20' und einen Sensor 10, 10' mit einem Sensorelement 12, 12' zur Messung einer physikalischen Größe.

Der Sensor 10, 10' umfasst mindestens ein elastisches Dämpfungselement 14, 14', welches äußere Störschwingungen bzw. Störfrequenzen dämpft und Mittel 14.1, 14.1' zur elektrischen und/oder mechanischen Kontaktierung des Sensorelements 10, 10' aufweist. Das elastische Dämpfungselement 14, 14' ist zwischen der Leiterplatte 20 und dem Sensorelement 12 angeordnet und bildet bei den dargestellten Ausführungsbeispielen zusammen mit dem Sensorelement 12, 12' den Sensor 10, 10' aus.

Wie aus Fig. 1 bis 9 weiter ersichtlich ist, weist das elastische Dämpfungselement 14 in einem ersten Ausführungsbeispiel mindestens ein Federelement 14.1 mit zwei Kontaktelementen 14.3 auf. Alle Federelemente 14.1 des elastischen Dämpfungselements 14 sind jeweils über eine erste Kontaktfläche 14.4 eines ersten Kontaktelements 14.3 mit einem korrespondierenden ersten Kontaktbereich 12.1 des Sensorelements 12 verbunden. Die ersten Kontaktflächen 14.4 der einzelnen Federelemente 14.1 können an die korrespondierenden ersten Kontaktbereiche 12.1 des Sensorelements 12 angepresst, angeklebt, angelötet angeschweißt oder angecrimpt sein. Über eine zweite Kontaktfläche 14.5 eines zweiten Kontaktelements 14.3 ist das jeweilige Federelement 14.1 mit der Leiterplatte 20 der Sensoreinheit 1 verbunden. Für diese Verbindung können beliebige geeignete Verbindungstechniken, wie beispielsweise pressen, kleben, löten, schweißen oder crimpen verwendet werden.

Wie aus Fig. 1 weiter ersichtlich ist, sind die einzelnen Federelemente 14.1 von einem elastischen Dämpfungsmaterial 14.2 umhüllt, welches als Liquid Silicon Rubber (LSR) ausgeführt ist. Dies weist vorzugsweise isolierende Eigenschaften auf und kann eine zusätzliche Schutz- und Dämpfungsfunktion übernehmen. Bei alternativen nicht dargestellten Ausführungsformen eines erfindungsgemäßen Sensors kann das elastische Dämpfungselement lediglich das Federelement 14.1 umfassen, welches am Sensorelement 12 befestigt ist.

Wie insbesondere aus Fig. 2 und 3 weiter ersichtlich ist, wird das Federelement 14.1 in einem Stanz-Biegeverfahren aus einem federnden Bandmaterial mit einer vorzugsweise elektrisch gut leitenden, gut lötbaren und nicht korrosiven Oberfläche hergestellt. Hierbei werden in einem ersten Schritt mehrere Federelemente 14.1 mit zwei Kontaktelementen 14.3 aus einem geeigneten Bandmaterial ausgestanzt, wobei die einzelnen Federelemente 14.1 an beiden Enden jeweils über ein entsprechendes Verbindungsband 14.4 mit einander verbunden sind. Durch einen zweimaligen Biegevorgang wird der Verbindungssteg zwischen den beiden Kontaktelementen 14.3 zu einer Feder umgeformt, wobei verbleibende Haltestege zwischen den einzelnen Kontaktelementen 14.3 und dem Verbindungsband 14.4 die weitere Fertigung erleichtern. In einem späteren Fertigungsschritt werden die Haltestege entlang einer gestrichelt dargestellten Schnittlinie 14.7 durchtrennt.

Anstatt der beschriebenen Federgeometrie und dem beschriebenen Fertigungsverfahren zur Herstellung der Federelemente 14.1 sind auch andere Geometrien, wie beispielsweise kleine Schraubenfedern bzw. andere geeignete Fertigungsverfahren zur Herstellung der Federelemente 14.1 denkbar.

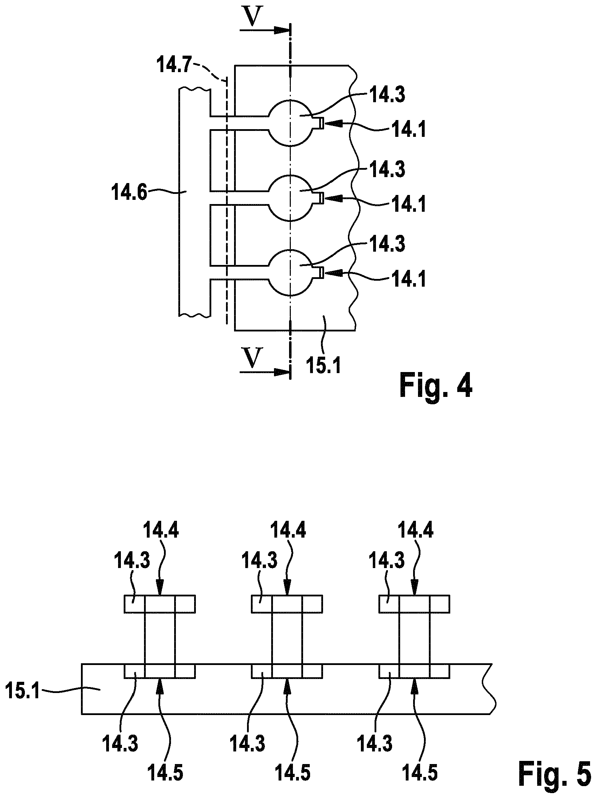

Wie aus Fig. 4 und 5 weiter ersichtlich ist, wird zur Herstellung des Sensors 10 ein Abschnitt des Bandmaterials, welcher mehrere Federelemente 14.1 umfasst in eine Werkzeugform 15.1 eingelegt, welche Aussparungen für die Kontaktelemente 14.3 aufweist.

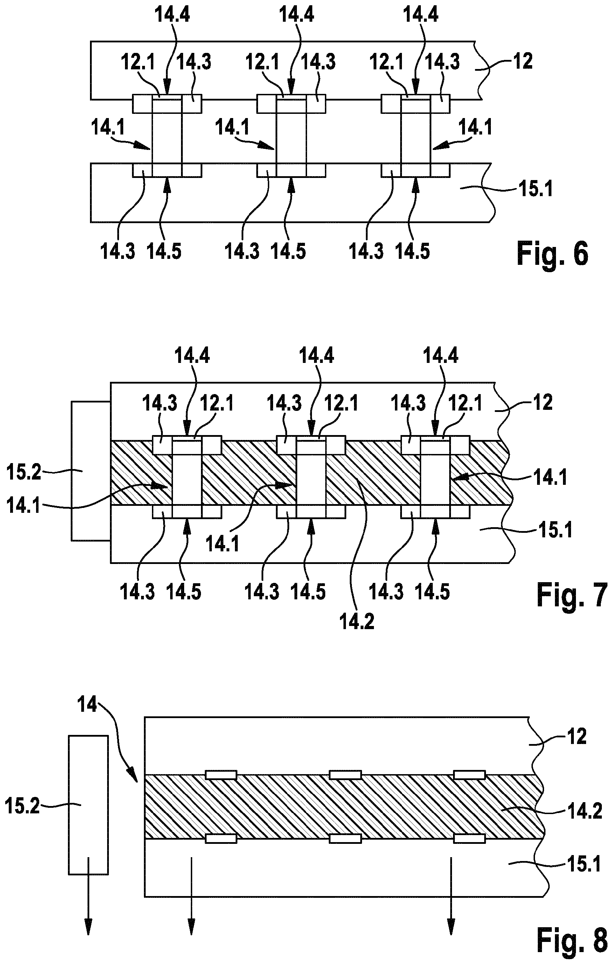

Wie aus Fig. 6 weiter ersichtlich ist, wird das Sensorelement 12, welches vorzugweise als Beschleunigungs- und/oder Drehratensensorelement ausgeführt ist und eine nicht dargestellte schwingende Masse sowie mehrere erste Kontaktbereiche 12.1 umfasst, so auf die Federelemente 14.1 aufgesetzt, dass die ersten Kontaktbereiche 14.4 der Kontaktelemente 14.3 sich im Wesentlichen mit den ersten Kontaktbereichen 12.1 des Sensorelements 12 überdecken. Anschließend werden die ersten Kontaktflächen 14.4 der Kontaktelemente 14.3 mit den ersten Kontaktbereichen 12.1 des Sensorelements 12 verbunden. Im dargestellten Ausführungsbeispiel werden die ersten Kontaktflächen 14.4 der Federelemente 14.1 an die ersten Kontaktbereiche 12.1 des Sensorelements 12 gelötet, wobei das mindestens eine Federelement 14.1 einen gewissen Anpressdruck erzeugt, um einen sicheren Lötvorgang zu ermöglichen.

Wie aus Fig. 7 weiter ersichtlich ist, wird die Werkzeugform 15.1 durch weitere Werkzeugformen 15.2 geschlossen, so dass sich im Bereich der Federelemente 14.1 zwischen dem Sensorelement 12 und der Werkzeugform 15.1 ein abgeschlossener Raum ergibt, welcher mit Dämpfungsmaterial 14.2, insbesondere Liquid Silicon Rubber, gefüllt wird. Über Luftkanäle wird eine vollständige Füllung des Zwischenraums sichergestellt, so dass die Federelemente 14.1 vollständig von dem Dämpfungsmaterial 14.2 umgeben ist. Zudem können Maßnahmen, beispielsweise durch eine entsprechende Formgebung der Werkzeugform 15.1 ergriffen werden, um während der Befüllung des Zwischenraums die Kontaktelemente 14.3 der Federelemente 14.1 auszusparen, welche mit den Kontaktbereichen 20.1 der Leiterplatte 20 verbunden werden. Bevor das LSR-Material bzw. das Dämpfungsmaterial 14.2 durchgehärtet ist, werden die Werkzeugformen 15.1, 15.2 entfernt, wie aus Fig. 8 weiter ersichtlich ist. Dabei werden die Verbindungsbänder 14.6 entlang der in Fig. 3 und 4 dargestellten Schnittlinie 14.7 von den Kontaktelementen 14.3 getrennt. Anschließend wird das LSR-Material bzw. das Dämpfungsmaterial 14.2 in einem Temperaturofen ausgehärtet. Danach ist das elastische Dämpfungselement 14 mit dem Sensorelement 12 verbunden und Teil des Sensors 10. Der Sensor 10 kann nun entweder abschließenden Tests oder einer Gurtung für die Weiterverarbeitung zugeführt werden.

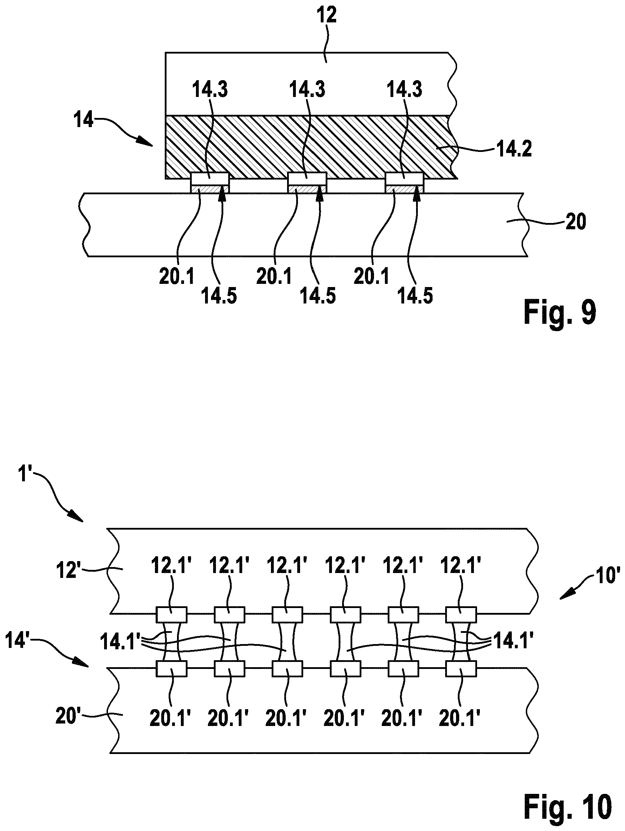

Wie aus Fig. 9 weiter ersichtlich ist, wird der fertige Sensor 12 über die zweiten Kontaktflächen 14.5 der zweiten Kontaktelemente 14.3 elektrisch und/oder mechanisch mit den zweiten Kontaktbereichen 20.1 der Leiterplatte 20 verbunden. Zusätzlich kann die Leiterplatte 20 über weitere nicht dargestellte Dämpfungselemente, welche zwischen einem nicht dargestellten Gehäuse und der Leiterplatte 20 angebracht werden können, gedämpft werden. Zudem können weitere Bauteile und Baugruppen, wie beispielsweise eine Auswerte- und Steuereinheit, auf der Leitplatte 20 platziert werden, um die Sensoreinheit 1 zu vervollständigen.

Wie aus Fig. 10 weiter ersichtlich ist, weist das dargestellte zweite Ausführungsbeispiel ebenfalls ein elastisches Dämpfungselement 14' auf, welches zwischen dem Sensorelement 12' und der Leiterplatte 20' angeordnet ist. Im Unterschied zum ersten Ausführungsbeispiel umfasst das elastische Dämpfungselement 14' mehrere Leitkleberverbindungen 20.1', welcher eine vorgegebene Viskosität und/oder Duktilität aufweisen. Auf diese Weise wird eine elektrische und mechanische Verbindung zwischen ersten Kontaktbereichen 12.1' des Sensorelements 12 und zweiten Kontaktbereichen 20.1' der Leitplatte 20' geschaffen, wobei der Leitkleber zusätzlich eine Dämpfungsfunktion übernimmt. Der Leitkleber für die Leitkleberverbindungen 14.1' wird so ausgewählt, dass nach der Aushärtung die erforderliche Viskosität und Duktilität vorhanden ist, um ein Feder-Massesystem mit dem Sensorelement 12 als Masse und den Leitkleberpunkten als Dämpfungselement 14' umsetzen zu können. Die Vorteile des zweiten Ausführungsbeispiels liegen in den sehr geringen Kosten und in einer geringeren Bauhöhe. Dafür müssen ggf. starke Temperaturabhängigkeiten und hohe Anforderungen an die Applikation des Leitklebers in Kauf genommen werden.

Zur Herstellung der Sensoreinheit 1', welche die Leiterplatte 20' und den Sensor 10' mit dem Sensorelement 12' aufweist, welches vorzugweise als Beschleunigungs- und/oder ein Drehratensensorelement 12 ausgeführt ist und eine schwingende Masse sowie mehrere erste Kontaktbereiche 12.1' aufweist, wird jeweils zwischen die ersten Kontaktbereiche 12.1' des Sensorelements 12' und die korrespondierenden zweiten Kontaktbereiche 20.1' der Leiterplatte 20' Leitkleber mit einer vorgegebenen Viskosität und Duktilität eingebracht. Anschließen wird der Leikleber ausgehärtet. Der ausgehärtete Leikleber der einzelnen Leitkleberverbindungen 14.1' wirkt als elastisches Dämpfungselement 14' und bildet mit dem Sensorelement 12' ebenfalls ein Feder-Massensystem, welches unerwünschte Störschwingungen bzw. Störfrequenzen dämpft.

## Patentansprüche

1. Sensoreinheit mit einem Sensor (10, 10') und einer Leiterplatte (20, 20'), auf welcher der Sensor (10, 10') angeordnet ist, wobei der Sensor ein Sensorelement (12, 12') zur Messung einer physikalischen Größe aufweist, wobei der Sensor mindestens ein elastisches Dämpfungselement (14') aufweist, welches äußere Störungsschwingungen dämpft und das mindestens eine elastische Dämpfungselement (14') Mittel (14.1') zur elektrischen und/oder mechanischen Kontaktierung des Sensorelements (12, 12') aufweist
**dadurch gekennzeichnet, dass**
das mindestens eine elastische Dämpfungselement (14') als elastische Leitkleberverbindung (14.1') ausgeführt ist, welche eine vorgegebene Viskosität und/oder Duktilität aufweist, wobei die mindestens eine Leitkleberverbindung (14.1') zwischen der Leiterplatte (20') und dem Sensorelement (12') eingebracht wird, um das Sensorelement (12') elektrisch und mechanisch mit der Leiterplatte (20') zu verbinden.

2. Sensoreinheit nach Anspruch 1, wobei das Sensorelement (12, 12') des Sensors (10, 10') eine Beschleunigung und/oder eine Drehrate misst.

3. Verfahren zur Herstellung einer Sensoreinheit, welche eine Leiterplatte (20, 20'), und einen Sensor (10, 10') mit einem Sensorelement (12, 12') aufweist, wobei das Sensorelement (12, 12') des Sensors (10, 10') mit mindestens einem elastischen Dämpfungselement (14') verbunden wird, und das Sensorelement (12, 12') über Mittel (14.1') zur elektrischen und/oder mechanisch Kontaktierung des mindestens einen Dämpfungselements (14') mit der Leiterplatte (20, 20') verbunden wird,
**dadurch gekennzeichnet, dass**
das mindestens eine elastische Dämpfungselement (14') als mindestens eine Leitkleberverbindung (14.1') mit einer vorgegeben Viskosität und/oder Duktilität ausgeführt wird, wobei die mindestens eine Leitkleberverbindung (14.1') zwischen der Leiterplatte (20') und dem Sensorelement (12') eingebracht wird, um das Sensorelement (12') elektrisch und mechanisch mit der Leiterplatte (20') zu verbinden..

## Claims

1. Sensor unit with a sensor (10, 10') and a circuit board (20, 20'), on which the sensor (10, 10') is disposed, wherein the sensor comprises a sensor element (12, 12') for measuring a physical variable, wherein the sensor comprises at least one elastic damping element (14') that damps external interference oscillations and the at least one elastic damping element (14') comprises means (14.1') for electrical and/or mechanical contacting of the sensor element (12, 12'),
**characterized in that**
the at least one elastic damping element (14') is implemented as an elastic conductive glue connection (14.1') having a specified viscosity and/or ductility, wherein the at least one conductive glue connection (14.1') is introduced between the circuit board (20') and the sensor element (12') in order to connect the sensor element (12') electrically and mechanically to the circuit board (20').

2. Sensor unit according to Claim 1, wherein the sensor element (12, 12') of the sensor (10, 10') measures an acceleration and/or a rotation rate.

3. Method for manufacturing a sensor unit comprising a circuit board (20, 20') and a sensor (10, 10') with a sensor element (12, 12'), wherein the sensor element (12, 12') of the sensor (10, 10') is connected to at least one elastic damping element (14'), and the sensor element (12, 12') is connected to the circuit board (20, 20') via means (14.1') for electrical and/or mechanical contacting of the at least one damping element (14'),
**characterized in that**
the at least one elastic damping element (14') is implemented as at least one conductive glue connection (14.1') having a specified viscosity and/or ductility, wherein the at least one conductive glue connection (14.1') is introduced between the circuit board (20') and the sensor element (12') in order to connect the sensor element (12') electrically and mechanically to the circuit board (20').

## Revendications

1. Unité de capteur comprenant un capteur (10, 10') et une carte à circuits imprimés (20, 20') sur laquelle est disposé le capteur (10, 10'), le capteur présentant un élément de capteur (12, 12') pour mesurer une grandeur physique, le capteur présentant au moins un élément d'amortissement élastique (14') qui amortit les oscillations perturbatrices extérieures et l'au moins un élément d'amortissement élastique (14') présentant des moyens (14.1') pour le contact électrique et/ou mécanique de l'élément de capteur (12, 12'), **caractérisée en ce que**
l'au moins un élément d'amortissement élastique (14') est réalisé sous la forme de connexion élastique à colle conductrice (14.1') qui présente une viscosité et/ou une ductilité prédéfinies, l'au moins une connexion à colle conductrice (14.1') étant introduite entre la carte à circuits imprimés (20') et l'élément de capteur (12') afin de relier l'élément de capteur (12') électriquement et mécaniquement à la carte à circuits imprimés (20').

2. Unité de capteur selon la revendication 1, dans laquelle l'élément de capteur (12, 12') du capteur (10, 10') mesure une accélération et/ou une vitesse de rotation.

3. Procédé de fabrication d'une unité de capteur qui présente une carte à circuits imprimés (20, 20') et un capteur (10, 10') avec un élément de capteur (12, 12'), l'élément de capteur (12, 12') du capteur (10, 10') étant connecté à au moins un élément d'amortissement élastique (14') et l'élément de capteur (12, 12') étant connecté avec la carte à circuits imprimés (20, 20') par le biais de moyens (14.1') pour le contact électrique et/ou mécanique de l'au moins un élément d'amortissement (14'),
**caractérisé en ce que**
l'au moins un élément d'amortissement élastique (14') est réalisé sous la forme d'au moins une connexion à colle adhésive (14.1') ayant une viscosité et/ou une ductilité prédéfinies, l'au moins une connexion à colle conductrice (14.1') étant introduite entre la carte à circuits imprimés (20') et l'élément de capteur (12') afin de relier l'élément de capteur (12') électriquement et mécaniquement à la carte à circuits imprimés (20').
